# EUROPÄISCHE PATENTANMELDUNG

(11) **EP 1 172 148 A1**
(43) Veröffentlichungstag der Anmeldung: **16.01.2002**
(21) Anmeldenummer: 00115345.1
(22) Anmeldetag: 14.07.2000
(51) Int. Cl.: B02C 18/44

(54) **Vorrichtung und Verfahren zur Zerkleinerung von Gummi**

(71) Anmelder: New Activation Technology (NAT) AG, 9490 Vaduz (LI)
(72) Erfinder: Balabekov, Makhmud, Prof. Dr., Tashkent (UZ); Balabekov, Shukhrat, Tashkent (UZ); Jovanovic, Djordje, 60598 Frankfurt (DE)
(74) Vertreter: Büchel, Kurt F., Dr.

(57) **Zusammenfassung**

Ein Verfahren zur Zerkleinerung von Elastomeren, insbesondere Reifen, durch allseitige Kompression des Materials und anschliessendem schrägem Anschneiden mit einer umlaufenden Schneidekante und gleichzeitigem Zerreiben des Anschnitts an einer Flanke der Schneide. Eine Vorrichtung zur Durchführung des Verfahrens umfasst ein walzenförmiges Schneidewerkzeug (2) mit schraubengewundenen Schneidekanten, die sich diametral von beiden Aussenrändern der Walze (2) zur Walzenmitte hin drehen, ein Vorschubmittel (3), Gegenlager (10, 11) zum Schneidewerkzeug (2) und Vorschubmittel (3) sowie, gegebenenfalls eine Halterungsvorrichtung (6).

## Beschreibung

Die Erfindung betrifft eine Vorrichtung und ein Verfahren zur Zerkleinerung von gummielastischem Material. Die Erfindung bezieht sich insbesondere auf eine Vorrichtung und ein Verfahren zum Recycling von Produkten aus Elastomeren wie Naturkautschuk oder synthetischen Kautschuk, vorzugsweise von Altreifen.

Zur Zerkleinerung von Reifen sind mechanische, thermomechanische und chemisches Verfahren, sowie auf Mikrowellen-, Hochtemperatur-, Kryo- und Explosionstechniken basierende Verfahren bekannt.

Eine Vorrichtung zur Verarbeitung von Altreifen wird beispielsweise in der SU 1 353 612 beschrieben. Die Reifen werden zunächst abgekühlt und anschliessend von beidseitig radial am Reifen wirkenden Zerstörungselementen zerkleinert. Die diametral angeordneten Radsätze der Zerstörungselemente bestehen aus einem Antriebskegelrad und zwei Rollensätzen, die symmetrisch zum Reifen drehbar sind. Ein erster Rollensatz befindet sich an der Innenseite des Reifens, der zweite an der Aussenseite des Reifens, wobei auf den Rollensätzen Kanten als Zerstörungselemente vorgesehen sind.

In der SU 1 346 244 wird eine Vorrichtung zur Zerkleinerung von Altreifen beschrieben, die aus einem Materialbehälter, einem Zerkleinerer, einer Fördermechanik für das Material hin zur Zerkleinerungszone, einem Tiefkühlmittel zur Abkühlung des zerkleinerten Materials sowie einem Austrageblock besteht. Der Zerkleinerer ist aus zwei Mahlsteinen, einem drehenden Oberstein und einem stehenden Unterstein, in deren inneren sich ein konzentrisch zu den beiden Steinen angeordnetes Tiefkühlaggregat für das zu zerkleinernde Material befindet.

Die genannten beiden Konstruktionen sind aufwendig und erreichen lediglich geringe Leistungen bei relativ hohem Energiebedarf pro Masseeinheit. Weiters sind die Zerkleinerer nicht verschleissfest und auf bestimmte Reifentypen eingeschränkt.

Deshalb liegt der Erfindung die Aufgabe zugrunde, ein neues energieeffizientes und leistungsstarkes Verfahren sowie eine Vorrichtung zur Zerkleinerung von gummielastischen Körpern, insbesondere für Reifen, bereitzustellen.

Ein gummielastischer Körper in Rahmen der Erfindung ist ein bei Raumtemperatur aus einem gummielastischen Polymer auf der Basis von Naturkautschuk bzw. synthetischen Kautschuk oder einem anderen Elastomer gefertigtes Produkt. Das Elastizitätsmodul ist bekanntlich durch Materialwahl, Vernetzungsart und -grad sowie dem Zusatz von Additiven in einem weiten Bereich variabel.

Beim erfindungsgemässen Verfahren wird das Volumen des gummielastischen Körpers vor dem Zerkleinern - vorzugsweise allseitig - komprimiert. Dabei unterliegt der Körper einer dreidimensionalen Spannung, unter anderem einer Druckdeformation in Schubrichtung zum Zerkleinerungswerkzeug als auch einer diametralen Querkontraktion quer zur Schubrichtung am Zerkleinerungswerkzeug.

Der allseitig komprimierte Körper wird von umlaufenden Schneidekante am Zerkleinerungswerkzeug schräg angeschnitten, wobei der Anschnitt zugleich an einer Flanke der Schneide zerrieben wird. Zum Zerreiben ist zumindest eine Flanke der Schneide mit einer rauhen Oberfläche ausgestattet.

Der gummielastische Körper wird zum Zerkleinern kontinuierlich von einem Vorschubmittel dem Zerkleinerungswerkzeug zugeführt, wobei zugleich der Teilbereich des Körpervolumens zwischen dem Vorschubmittel und dem Zerkleinerungswerkzeug allseitig komprimiert wird. An der allseitigen Kompression sind das Zerkleinerungswerkzeug, das Vorschubmittel und deren Gegenlager beteiligt, zwischen denen der zu zerkleinernde Teil des Körpers hindurchgetrieben wird. Gegebenenfalls kann man noch zusätzliche Anpressmittel anordnen.

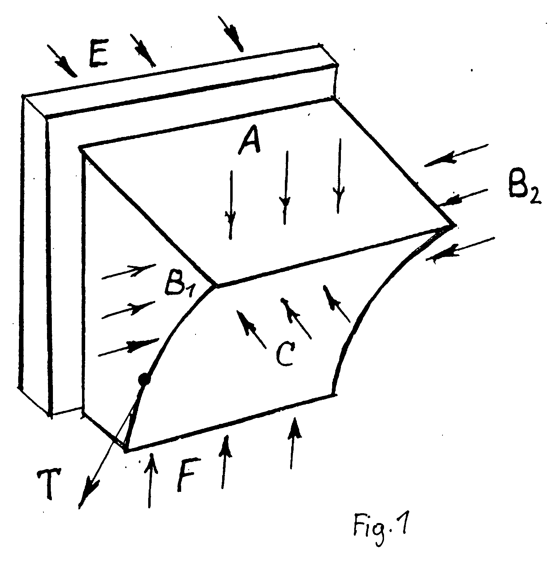

Die allseitige Krafteinwirkung bei der Kompression auf einen gummielastischen Körper vor der Zerkleinerung ist in Figur 1 durch die Pfeile A, B₁, B ₂, C, E und F schematisch dargestellt. Die Krafteinwirkung setzt sich zusammen aus einer Vorschubkraft A, bewirkt durch den Vortrieb des Vorschubmittels, einer senkrecht zur Kraft A stehenden Stützkraft F erzeugt durch den Reibungsdruck der Unterlage des gummielastischen Körpers an einem Gegenlager zum Vorschubmittel, einer zu den beiden Kräften A und F quer wirkenden, zum Zerkleinerungswerkzeug gerichteten Kraft E, die von einem Gegenlager zum Zerkleinerungswerkzeug bewirkt wird sowie die vom Zerkleinerungswerkzeug erzeugten Kräfte B₁, B ₂ und C. Die diametral wirkenden, durch die beidseitige Querkontraktion am Zerkleinerungswerkzeug erzeugten, zueinander gerichteten Kräfte B₁ und B₂ wirken quer zur Vorschubrichtung und den Kräften A, F sowie senkrecht auf die Stützkräfte E. Zusätzlich entstehen in einer zu den Kraftlinien von B₁ und B₂ schrägen Ebene an den Spitzen der Schneidekanten radial wirkenden Kräfte C. Da die Kräfte A, B, C, E und F mit unterschiedlichen Kraftlinien aus sämtlichen Raumrichtungen wirkend, zueinander und zur Mitte des komprimierten Körper gerichtet sind, wird der Teilbereich des Körpervolumens zwischen dem Vorschubmittel und dem Zerkleinerungswerkzeug von allen Seiten komprimiert. Aus der Vektorensumme der Kräfte A, B₁, B ₂, C, E, und F resultiert die tangential zur radialen Kraft C gerichtete Expansionskraft T des komprimierten gummielastischen Körpers, die gegen die Schneidekanten des Zerkleinerungswerkzeugs gerichtet ist und somit den Schneidvorgang unterstützt.

Die Zerkleinerung des gummielastischen Körpers erfolgt somit durch das Zusammenwirken der Scherkräfte des Zerkleinerungswerkzeugs mit den auf das Zerkleinerungswerkzeug, vorzugsweise dessen rauhe Oberfläche, gerichteten, freigesetzten Expansionskräften aus dem Energieüberschuss des komprimierten Körpers. Aufgrund der gummielastischen Eigenschaft des Materials wird ein Teil der durch die allseitige Kompression zugeführten Verformungsarbeit im Material als elastisches Potential gespeichert und diese inneren Energie anschliessend zur Zerstörung des plastischen Körpers freigesetzt. Da sich der komprimierte Körper in einem überspannten Zustand befindet, erfolgt nach der Initialisierung durch die Schneidekante am Zerkleinerungswerzeug die Freisetzung der inneren Energie explosionsartig. Diese unterstützende Wirkung der Expansionskräfte des komprimierten, gummielastischen Materials steigert überdies die Effizienz des Zerkleinerungswerkzeugs massgeblich und führt zu einem wesentlich niedrigeren Energiebedarf, geringerer Erwärmung des zerkleinerten Materials und einem höheren Zerfallsgrad ohne die Aktivität des Pulvers zu vermindern.

Die zum Zerkleinern notwendige Relativbewegung zwischen gummielastischen Körper und Zerkleinerungswerkzeug entsteht wie bei den meisten Spanverfahren aus der Vorschubbewegung und der Schnittbewegung, die die Zerkleinerungsleistung mitbestimmen. Für das erfindungsgemässe Verfahren liegt das Verhältnis (Vₙ/Vₚ) der Vorschubgeschwindigkeit Vₙ zur Schnittgeschwindigkeit Vₚ bevorzugt im Bereich von 1:10 bis 1:40. Eine zu hohe Schnittgeschwindigkeit würde zu einer Erhöhung der Scherwärme am gummielastischen Material führen und damit die Qualität, insbesondere Aktivität, des erhaltenen Pulvers mindern.

Weiters ist der Schnittwinkel α der Schneidekanten am Zerkleinerungswerkzeug grösser oder gleich dem vom Material abhängigen Reibungswinkel α_{T} zwischen dem gummielastischen Körper und seiner Unterlage am Gegenlager. Ein zu grosser Reibungswinkel α_{T} würde statt der Scherbeanspruchung zu einem Einstechen der Schneidekanten in den gummielastischen Körper führen.

Das Verhältnis der Winkel α/α_{T} bestimmt auch den Leistungsbedarf. Der aufzubringende Druck beim Anstellen des Zerkleinerungswrkzeugs an den gummielastischen Körper hängt von dessen Elastizität ab. Je weicher das Material desto weniger Druck wird benötigt.

Um eine Querkontraktion auszuüben, ist das Zerkleinerungswerkzeug mit umlaufenden, schraubengewundenen Schneidekanten ausgestattet, die - im Betriebszustand beim Eingriff in den gummielastischen Körper - den Körper mit einer förderschneckenartigen, von aussen nach innen drehenden, Bewegung zusammendrängen. Die beidseitige, diametrale Querkontraktion entsteht aus dem Zusammenspiel zueinander drehender, links- und rechtsdrehender, Schraubengänge am Zerkleinerungswerkzeug. Durch die Rotation der schraubenförmigen Schneideteile am Zerkleinerungswerkzeug in tangentialer-, dazu gegenläufiger- und in Achsrichtung, drückt das Zerkleinerungswerkzeug den gummielastischen Körper beim Eingriff sowohl diametral in tangentialer als auch in radialer Richtung vor der Initialisierung der Zerkleinerung durch den Anschnitt zusammen.

Die Ganghöhe bzw. die Anzahl der Schraubenwindungen wird in Abhängigkeit vom gewünschten Zerkleinerungsgrad festgelegt. Anstelle eines können zwei oder mehrere Zerkleinerungswerkzeuge, beispielsweise jeweils nur mit einem unidirektionalen Schraubengang, gegebenenfalls auch kugelförmig, vorgesehen sein.

Die Flanken der Schneidekanten, über die der abgehobene Span abläuft, sind zumindest teilweise mit einer rauhen Oberfläche ausgestattet. Die erreichbare Feinheit des gummielastischen Pulvers aus dem Verfahren ist abhängig von der Körnung der rauhen Oberfläche.

Für die Oberfläche des Zerkleinerungswerkzeug wird bevorzugt entsprechend gehärtetes Material eingesetzt, beispielsweise mit einer Oberflächenhärte von etwa 5x10¹⁰ Pa und einer Hitzestandfestigkeit von etwa 1500°C, insbesondere der aufgerauhten Schneidekantenflanken, um die Standfestigkeit bei dauerhaften Betrieb unter den dabei wirkenden Drücken und Kräften zu gewährleisten.

Als Vorschubmittel sind von Spanverfahren, insbesondere dem Fräsen, bekannte Vorschubantriebe geeignet. Die Oberfläche des Vorschubmittels kann zur Unterstützung des Vorschubs des plastischen Körpers mit entsprechenden reibungs- bzw. angriffsfördernden Mittel ausgestattet sein. Die Oberfläche kann beispielsweise aufgerauht, gerippt oder mit Ausstülpungen wie Stollen, Haken, Rillen oder ähnlichem versehen sein.

Durch dieses Verfahren ist der plastische Körper direkt, d.h. ohne eine Zwischenstufe, zu Pulver verarbeitbar. Das gebildete Pulver zerfällt nicht und ist deshalb ausgezeichnet weiterverarbeitbar und regenerierbar (d.h erneut vulkanisierbar).

Eine, beispielsweise kryotechnische, Vorbehandlung des Körpers ist für das erfindungsgemässe Verfahren nicht nötig.

Das erfindungsgemässe Verfahren besitzt einen hohen Wirkungsgrad bei der Zerkleinerung von gummielastischem Material, wobei kaum Erwärmung auftritt und damit die Aktivität des Pulvers aufrecht bleibt. Die Zerkleinerung zeichnet sich ausserdem durch geringe Lärmentwicklung und Umweltfreundlichkeit aus. Durch spezielle Oberflächenhärtung kann der Verschleissgrad des Zerkleinerungswerkzeugs erheblich herabgesetzt werden.

Das erfindungsgemässe Verfahren eignet sich zum Zerkleinern von Produkten aus Elastomeren, beispielsweise Förderbänder, Keilriemen, Schläuche, Rohre, Reifen, etc. Es ist insbesondere zum Recycling von Reifen einsetzbar.

Das Verfahren kann mit einer Vorrichtung durchgeführt werden, die ein, gegebenenfalls walzenförmiges, rotierbares Zerkleinerungswerkzeug, eine mit dem Zerkleinerungswerkzeug zusammen wirkendes und gleichlaufendes - in Vortriebsrichtung vor dem Zerkleinerungswerkzeug angeordnetes - Vorschubmittel sowie Gegenlager, wie Anpressrollen oder Spannleisten, zur Erzeugung von Gegendrücken auf das Vorschubmittel und das Zerkleinerungswerkzeug von den gegenüberliegenden Seiten des zu verarbeitenden Körpers umfasst, wobei - im Betriebszustand - ein Teilvolumen des zu verarbeitenden gummielastischen Körpers zwischen die beiden Walzen und deren Gegenlager eingespannt ist, so dass ein allseitiger Druck auf den Körper ausübbar ist.

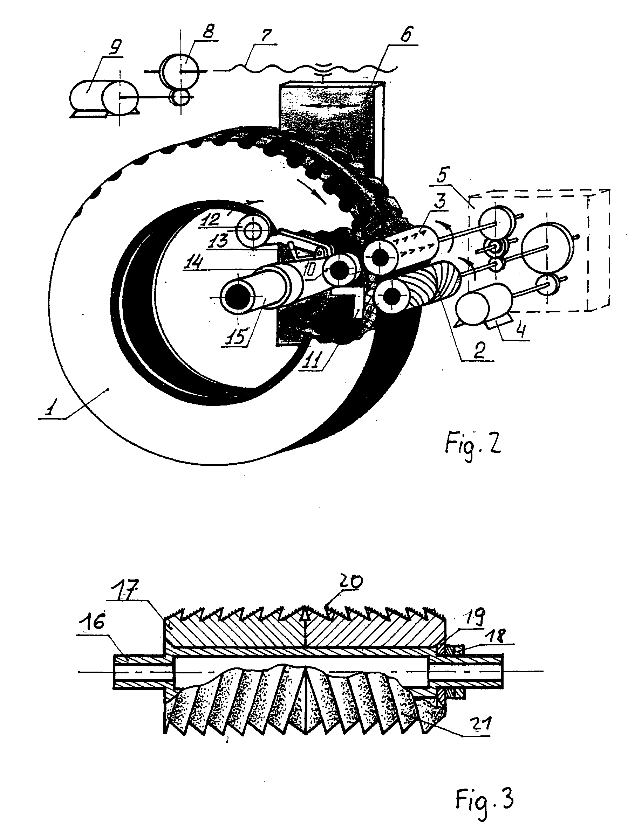

Ein Ausführungsbeispiel für eine Vorrichtung zur Zerkleinerung von Reifen ist in den Fig. 2 und 3 dargestellt.
Es zeigen:
Fig. 2 eine Zerkleinerungsvorrichtung mit einem eingespannten Reifen und
Fig. 3 eine Detailansicht des Zerkleinerungswerkzeugs aus der Vorrichtung aus Fig. 2.

Aus Figur 2 ist die Funktionsweise einer Vorrichtung zur Zerkleinerung von Reifen ersichtlich. Die Vorrichtung besteht aus einem walzenförmigen Zerkleinerungswerkzeug 2 mit schraubengewundenen Schnittkanten am Mantel; einem als Stollenvorschubwelle 3 ausgebildetem Vorschubmittel; einem Antrieb aus Motor 4 und Getriebe 5 für das Zerkleinerungswerkzeug 2 und der Stollenvorschubwelle 3; einem Zustellschlitten 6 für den Reifen 1, der elektromechanisch durch einen Motor 9, einem Getriebe 8 und einer Welle 7 zum Zerkleinerungswerkzeug 2 hin verschiebbar ist; einer Halterungs-, und Justiervorrichtung am Schlitten 6 für den Reifen 1 aus einer Schlittenachse 15, an der an einem schwenkbaren Hebelarm 13 Stützrollen 12 angeordnet sind sowie Anpressrollen 10 als Gegenlager zur Stollenvorschubwelle 3 und eine Spannleiste 11 als Gegenlager zum Zerkleinerungswerkzeug 2. Die Anpressrollen 10 und die Spannleiste 11 sind entlang und um die Schlittenachse 15 verdreh- und verschiebbar.

Ein Reifen 1 ist auf den im Reifeninnenmantel zu liegen kommenden Anpressrollen 10 und der Spannleiste 11 aufgesetzt. Das Aufsetzen des Reifens sowie der Nachschub an Reifen ist selbstverständlich automatisierbar. Oberhalb der Schlittenachse 15 ist die Stützrolle 12 für den Reifen an der Halterung 13 angeordnet. Die Halterung 13 besteht aus einem Schwenkarm, der an einem Ende an der Schlittenachse 15 gelenkig gelagert und am zweiten Ende mit Stütz- bzw. Führungsrollen 12 ausgestattet ist. Der Reifen 1 ist mit dem Reifensitz auf den Stütz- bzw. Führungsrollen 12 gelagert und durch Schwenken der Halterung 13 gegenüber dem Schlitten 6 justierbar. Es ist bevorzugt die Halterung 13 so einzustellen, dass die Reifenachse auf dem selben Niveau wie die Schlittenachse 15 zu liegen kommt und die Reifenmittelebene quer zum Zerkleinerungswerkzeug 2 und der Stollenvorschubwelle 3 steht. Der Schlitten 6 ist zum Aufsetzen des Reifens 1 zurücksetzbar und in Richtung des Zerkleinerungswerkzeugs 2 verschiebbar.

Zur Zerkleinerung des Reifens 1 wird der Schlitten 6 samt dem aufgesetzten Reifen 1 zum Zerkleinerungswerkzeug 2 zugestellt, dass sowohl die Stollenzufuhrwelle 3, das Zerkleinerungswerkzeug 2 am Reifenprofil, als auch die Spannrollen 10 und die Spannleiste 11 am Innenmantel vollständig zur Anpressung gelangen. Beim Starten des Motors 4 führt die Stollenwelle 3 den Reifen 1 in die Zone zwischen das Zerkleinerungswerkzeug 2 und die Spannleiste 11. Die Rotation des Zerkleinerungswerkzeugs 2 löst einen diametralen förderschneckenartigen Quervorschub der schraubenförmigen Schnittkanten am Zerkleinerungswerkzeug 2 aus, wobei durch den spiegelsymetrischen Schraubengang der vom Zerkleinerungswerkzeug 2 erfasste Teil des Reifens 1 beidseitig, seitlich von aussen nach innen gepresst wird. Durch die seitliche Schneckenförderung der Schneidekanten werden selbst die Reifenseitenwände und das Wulstband nach und nach in die Zerkleinerungszone hineingezogen. Damit "fräst" sich das Zerkleinerungswerkzeug 2 durch den gesamten Reifen hindurch. Dabei wird das komprimierte Material an der Restflächenschicht des Reifens von den Schnittkanten schräg angeschnitten und von der rauhen Oberfläche der Schnittkantenflanken zerrieben. Im Ausführungsbeispiel erstrecken sich das Zerkleinerungswerkzeug 2 und die Stollenvorschubwelle 3 über die Profilbreite des Reifens 1 seitlich hinaus. Selbstverständlich sind stattessen auch schmälere Bauteile einsetzbar. Die achsenparalle Anordnung des Zerkleinerungswerkzeugs 2, der Stollenvorschubwelle 3, der Anpressrollen 10 und der Spannleiste 11 zueinander ist bevorzugt für eine effektive allseitige Komprimierung.

In Figur 3 ist das walzenförmige Zerkleinerungswerkzeug 2 im Detail dargestellt. Der Block des Zerkleinerungswerkzeuges besteht aus einer Hohlachse 16, auf der zwei Schneidebuchsen 17 mit links- bzw. rechtsgängigen schraubenförmigen Schneidekanten nebeneinander aufgesetzt sind. Die schraubenförmigen Schneiden gehen diametral von beiden Walzenrändern aus und drehen sich jeweils spiegelsymetrisch zur Walzenmitte. Gegebenenfalls kann Kühlflüssigkeit durch die Hohlachse 16 geführt werden. Die Schneidebüchsen 17 sind mit einer Schraubenmutter 18 über eine Spannscheibe 19 auf der Hohlachse 16 befestigt. Die rechts- und linksgängigen Schraubengänge der Schnittkanten 20 sind spiegelsymetrisch zueinander ausgebildet, so dass bei Rotation des Schneidewerkeugs in Betriebsrichtung die rechts- und linksgängigen Schraubengänge beidseitig jeweils eine diametrale förderschneckenartige Bewegung von aussen nach innen ausführen. Die Schneiden 20 - sowohl des rechts- als auch des linksgängigen Schraubengangs - sind schräg nach innen, d.h. zur Mitte des Zerkleinerungswerkzeugs weisend ausgerichtet. Die Oberfläche der Schraubenflanken 21, an den nach aussen abgewandten Seiten der Schraubengänge ist mit einer rauhen, gegebenenfalls aufgerauhten, verschleissfesten Oberfläche versehen. Der allseitig komprimierte Reifen wird durch die rauhen, äusseren Werkzeugoberflächen an den Schraubenflanken abgerieben und durch die schrägen Schneidekanten gleichzeitig angeschnitten. Die zur Walzenmitte weisenden Flanken sind steiler ausgebildet als die nach aussen gerichteten Flanken 21 die eine rauhe Oberfläche aufweisen.

Selbstverständlich kann anstelle von zwei Schneidebüchsen mit jeweils verschieden drehenden Schraubengängen auch eine Schneidebuchse mit den beiden entgegengesetzt gerichteten Schraubengängen vorgesehen werden.

Das Aufsetzen und die Justierung der Reifen ist wesentlich vereinfacht. Der Reifen ist mitsamt den Metall- und Textilkorden zerkleinerbar. Die Metall- und Textilteilchen können anschliessend nach bekannten Verfahren, beispielsweise Windsichten, Magnet- bzw. Elektroscheidung, etc., aufgrund der unterschiedlichen Materialeigenschaften leicht abgeschieden und sortiert werden.

Bei Zerkleinerung eines Altreifens mit einer Vorrichtung nach den Fig. 2 und 3 ist, beispielsweise, Gummipulver von einer Feinheit zwischen 0,005 - 10 mm bei einer Ausbeute von etwa 200 Kg/h gewinnbar, wobei das gebildete Pulver aktiv ist und nicht zerfällt. Denn das Pulver wird bei der Zerkleinerung lediglich einer Temperaturerhöhung von 50 -70°C ausgesetzt. Der spezifische Energieverbrauch beträgt während des Verfahrens ungefähr 0,05 kW/h/Kg und das eingesetzte Zerkleinerungswerkzeug mit einer Oberflächenhärte von 5x10¹⁰ Pa an den rauhen Schneidekanten verschleisst dabei kaum.

## Patentansprüche

1. Verfahren zum Zerkleinern von gummielastischen Körpern, **dadurch gekennzeichnet, dass** das Volumen des Körpers - vorzugsweise allseitig - komprimiert, schräg von einer umlaufenden Schneidekante (20) angeschnitten und zugleich an einer rauhen Flanke (21) der Schneidekante (20) zerrieben wird.

2. Verfahren nach Anspruch 1, umfassend:
a) kontinuierliches Vorschieben des Körper zu einem Zerkleinerungswerkzeug (2),
b) Komprimieren zumindest in einem Teilbereich des Körpervolumens zwischen einem Vorschubmittel (3) und dem Zerkleinerungswerkzeug (2),
c) Anschneiden des komprimierten Volumens mit einer umlaufenden Schneidekante (20) des Zerkleinerungswerkzeugs (2) schräg zur Vorschubrichtung, und
d) gleichzeitiges Zerreiben des Anschnitts an einer rauhen Flanke (21) der Schneidekante 20.

3. Verfahren nach Anspruch 2, **dadurch gekennzeichnet, dass** der Körper mit der Vorschubgeschwindigkeit Vₙ vorgeschoben wird und das Verhältnis der Vorschubgeschwindigkeit Vₙ zur Winkelgeschwindigkeit Vₚ der Schneidekante (20) in einem Bereich von 1:10 bis 1:40 liegt.

4. Verfahren nach einem der Ansprüche 2 oder 3, **dadurch gekennzeichnet, dass** der Winkel α der Schneidekante (20) grösser oder gleich dem Reibungswinkel α_{T} zwischen dem Körper und seiner Unterlage ist.

5. Verfahren nach einem der vorherigen Ansprüche, **dadurch gekennzeichnet, dass** ein Reifen (1) zerkleinert wird, und ein Teilvolumen des Reifens von zumindest einem Vorschubmittel (3), zumindest einem Zerkleinerungswerkzeug (2) und Gegenlagern (10, 11) zum Vorschubmittel (3) und dem Zerkleinerungswerkzeug (2) bei kontinuierlichem Vorschub komprimiert wird, wobei der Reifen (1) zwischen Vorschubmittel (3), Zerkleinerungswerkzeug (2) und den Gegenlagern (10, 11) hindurchgetrieben wird und die Schneidekante (20) am Zerkleinerungswerkzeug (2) eine diametrale schraubenförmige Förderbewegung von aussen nach innen, quer zur Vorschubrichtung ausführt, wobei der Reifen (1) erfasst und beidseitig quer zur Vorschubrichtung komprimiert wird.

6. Verfahren nach Anspruch 5, **dadurch gekennzeichnet, dass** der Reifen (1) rotierbar an einer Halterungsvorrichtung (6) gegenüber dem Zerkleinerungswerkzeug (2) und dem Vorschubmittel (3) justierbar gelagert ist, sowie der Reifen (1) vom Vorschubmittel (3) und dem Zerkleinerungswerkzeug (2) an seiner Aussenseite bzw. von den Gegenlagern (10, 11) an seiner Innenseite erfasst wird.

7. Vorrichtung zur Zerkleinerung von Reifen bestehend aus:
- einem walzenförmigen Zerkleinerungswerkzeug (2) mit schraubengewundenen Schneidekanten (20), die sich diametral von beiden Aussenrändern der Walze zur Walzenmitte hin drehen;
- einem in Vorschubrichtung vor dem Zerkleinerungswerkzeug angeordneten Vorschubmittel (3);
- ein Gegenlager, vorzugsweise eine Spannleiste (11), zum Zerkleinerungswerkzeug (2),
- ein Gegenlager, vorzugsweise zumindest eine Anpressrolle (10), zum Vorschubmittel (3).

8. Vorrichtung nach Anspruch 7, **dadurch gekennzeichnet, dass** eine Halterungsvorrichtung (6) der Vorrichtung zugeordnet ist, an der der Reifen (1) durch zumindest ein - bevorzugt in seiner Position verstellbares - Stützmittel, beispielsweise eine höhenverstellbare Stützrolle (12), um seine Achse rotierbar gelagert ist

9. Vorrichtung nach Anspruch 8, **dadurch gekennzeichnet, dass** die Gegenlager (10, 11) an der Halterungsvorrichtung (6) angeordnet sind und/oder die Halterungsvorrichtung (6) in Richtung des Zerkleinerungswerkzeugs (2) verschiebbar ist.

10. Walzenförmiges Zerkleinerungswerkzeug (2) mit von beiden Rändern diametral ausgehenden, jeweils zur Walzenmitte spiegelsymetrischen, von aussen nach innen drehenden, schraubenförmigen Schneiden, wobei die zur Walzenmitte weisenden Flanken steiler als die nach aussen gerichteten Flanken (21) und die nach aussen gerichteten Flanken (21)eine rauhe Oberfläche aufweisen.

11. Zerkleinerungswerkzeug nach Anspruch 10, **dadurch gekennzeichnet, dass** die Oberfläche der Schneiden zumindest an deren rauhen Flanken (21) eine Härte von etwa 5x10¹⁰ Pa aufweist.

12. Zerkleinerungswerkzeug nach einem der Ansprüche 10 oder 11, **dadurch gekennzeichnet, dass** es aus zwei auf einer Rotationswelle (16), gegebenenfalls mit einer Hohlachse, nebeneinander aufgesetzten, miteinander schlüssig schliessenden Büchsen (17, 19) mit schraubenförmigen Schneiden zusammengesetzt ist, wobei die jeweiligen Schraubengänge an den Büchsen zueinander, entgegengesetzt drehend, spiegelsymetrisch verlaufen.
